(19) Europäisches Patentamt / European Patent Office / Office européen des brevets

(11) **EP 3 379 745 B1**

(12) **EUROPEAN PATENT SPECIFICATION**

(45) Date of publication and mention of the grant of the patent:
**25.03.2020 Bulletin 2020/13**

(21) Application number: **15910097.3**

(22) Date of filing: **11.12.2015**

(51) Int Cl.:
**H04B 10/293** (2013.01)     **H04J 14/02** (2006.01)

(86) International application number:
**PCT/CN2015/097171**

(87) International publication number:
**WO 2017/096623 (15.06.2017 Gazette 2017/24)**

(54) **METHOD AND DEVICE FOR CONTROLLING TRANSMITTED POWER OF OPTICAL NETWORK UNIT, AND OPTICAL NETWORK UNIT**

VERFAHREN UND VORRICHTUNG ZUR STEUERUNG VON ÜBERTRAGENER LEISTUNG EINER OPTISCHEN NETZWERKEINHEIT SOWIE OPTISCHE NETZWERKEINHEIT

PROCÉDÉ ET DISPOSITIF POUR COMMANDER LA PUISSANCE TRANSMISE D'UNE UNITÉ DE RÉSEAU OPTIQUE, ET UNITÉ DE RÉSEAU OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.09.2018 Bulletin 2018/39**

(73) Proprietor: **Huawei Technologies Co., Ltd.
Longgang District
Shenzhen, Guangdong 518129 (CN)**

(72) Inventor: **WANG, Shuguang
Shenzhen
Guangdong 518129 (CN)**

(74) Representative: **Pfenning, Meinig & Partner mbB
Patent- und Rechtsanwälte
Theresienhöhe 11a
80339 München (DE)**

(56) References cited:
**CN-A- 101 247 182        CN-A- 101 247 182
CN-A- 104 683 022        CN-A- 104 683 022
US-A1- 2008 292 312      US-A1- 2015 318 928**

• **Itu-T: "ITU-T Recommendation G.987.3", , 1 January 2014 (2014-01-01), pages 116-117, XP055507915, Retrieved from the Internet: URL:https://www.itu.int/rec/dologin_pub.as p?lang=e&id=T-REC-G.987.3-201401-I!!PDF-E& type=items [retrieved on 2018-09-18]**

EP 3 379 745 B1

## Description

### TECHNICAL FIELD

Embodiments of the present invention relate to the field of communications technologies, and more specifically, to a method and an apparatus for controlling a transmit power of an optical network unit, and an optical network unit.

### BACKGROUND

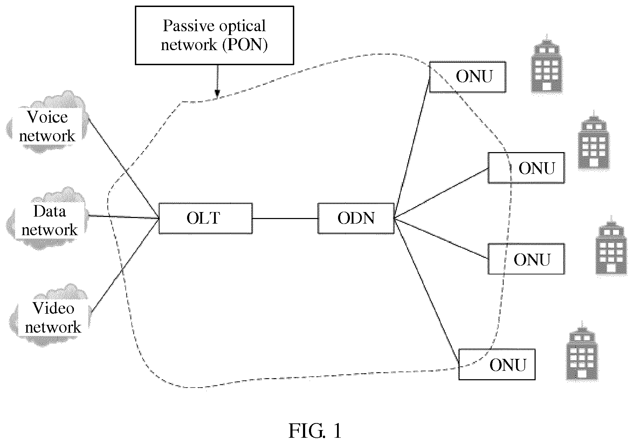

A PON (Passive Optical Network, passive optical network) generally includes an OLT (Optical Line Terminal, optical line terminal), an ODN (Optical Distribution Network, optical distribution network), and an ONU (Optical Network Unit, optical network unit)/ONT (Optical Network Terminal, optical network terminal). As shown in FIG. 1, an OLT provides a network-side interface for a PON system, and may provide multiple access services such as a voice, data, and a video for family and business users. An ONU provides a user-side interface for the PON system. An ODN is a PON-device-based FTTH (Fiber To The Home, fiber to the home) optical cable network, and provides an optical transmission channel between the OLT and the ONU. The ODN usually has a point-to-multipoint structure, that is, one OLT may be connected to multiple ONUs by using the ODN. If an ONU directly provides a user port function such as an Ethernet user port for accessing the Internet by using a personal computer, the ONU is referred to as an ONT.

In an existing passive optical network, distances between ONUs and an OLT are different (0 kilometers to 20 kilometers), and the OLT transmits light at a fixed optical transmit power. Therefore, after passing through serially connected ODNs on an optical fiber line, downstream light is attenuated to different degrees, and finally reaches the ONUs at different optical powers. Therefore, a relatively large fixed optical transmit power of the OLT is usually set, to ensure that an ONU that is farthest away from the OLT can receive an optical signal sent by the OLT. The ONU transmits an optical signal at a maximum transmit power by default, to ensure that, in the case of relatively high line attenuation, the OLT can also receive the optical signal sent by the ONU.

ITU-T G.987.3 stipulates a power management method used for an ONU, and defines three power management modes: a "doze mode" (Doze mode), a "cyclic sleep mode" (Cyclic sleep mode), and a "watchful sleep mode" (Watchful sleep mode). The ONU using the foregoing three power management modes saves energy by disabling and enabling a transmitter or a receiver in a timing manner when a user interface is idle. In addition, the ONU needs to periodically perform message communication with an OLT to ensure status synchronization, and therefore, the ONU cannot independently implement energy saving control.

CN 101 247 182 A describes an OLT which calculates a required transmit power based on optical sensivity of a light receiver and a maximum light attenuation, which is determined based on a receive power reported by an ONU in response to an optical signal transmitted with maximum transmit power. Further prior art useful for understanding the current disclosure is described in CN 104 683 022 A and US 2008/292312 A1.

For the ONU, when the user interface is not idle, because an upstream optical transmit power of the ONU is a fixed and relatively large value, energy consumption is increased. In the case of relatively low line attenuation, a large-power optical signal sent by an ONT is prone to exceed a sensitivity range of an OLT optical module. Consequently, a packet loss is caused, and normal service transmission is affected.

### SUMMARY

This application provides a method and an apparatus for controlling a transmit power of an optical network unit, and an optical network unit according to the appended independent claims, so that an upstream optical transmit power of the optical network unit is dynamically adjusted, and energy consumption is reduced. Advantageous embodiments are specified in the appended dependent claims.

According to a first aspect, an embodiment of this application provides a method for controlling a transmit power of an optical network unit comprising, locally stored, a sensitivity and a minimum overload corresponding to each of several optical power budget levels. The method includes: obtaining passive optical network identification information comprising an optical power budget level of an optical interface of an optical receiver of an optical line terminal; obtaining a transmit power of an optical transmitter of the optical line terminal and minimum sensitivity of the optical receiver of the optical line terminal according to the passive optical network identification information and obtaining the optical power budget level comprised in the passive optical network identification information by parsing an optical distribution network class field in the passive optical network identification information and querying the local storage for the stored minimum sensitivity corresponding to the obtained optical power budget level; obtaining a receive power of an optical receiver of the optical network unit; calculating line attenuation according to the transmit power of the optical transmitter of the optical line terminal and the receive power of the optical receiver of the optical network unit; and adjusting a transmit power of an optical transmitter of the optical network unit according to the line attenuation and the minimum sensitivity of the optical receiver of the optical line terminal. The transmit power of the optical transmitter is dynamically adjusted based on the line attenuation and the minimum sensitivity of the optical receiver, so that a power loss of a passive optical network system can be reduced.

According to the first aspect, in a first possible implementation of the method for controlling a transmit power of an optical network unit, in a gigabit-capable passive optical network GPON, the passive optical network identification information may be obtained by parsing a physical layer operation, administration and maintenance PLOAM message.

According to the first aspect, in a second possible implementation of the method for controlling a transmit power of an optical network unit, in a 10-gigabit-capable passive optical network XG-PON, the passive optical network identification information may be obtained by parsing a physical synchronization block of a downstream physical frame.

According to the first aspect, in a third possible implementation of the method for controlling a transmit power of an optical network unit, the transmit power of the optical transmitter of the optical line terminal and an optical distribution network type may be obtained according to the passive optical network identification information; and then, the minimum sensitivity of the optical receiver of the optical line terminal may be obtained according to the optical distribution network type.

According to a second aspect, an embodiment of this application provides an apparatus for controlling a transmit power of an optical network unit. The apparatus has functions of implementing the method in any one of the first aspect or the foregoing implementations of the first aspect. The functions may be implemented by using hardware, or may be implemented by hardware by executing corresponding software. The hardware or software includes one or more modules that correspond to the foregoing functions. In a possible design, the apparatus includes: a sensitivity and a minimum overload corresponding to each of several optical power budget levels locally stored; a first obtaining unit, configured to obtain passive optical network identification information comprising an optical power budget level of an optical interface of an optical receiver of an optical line terminal; a second obtaining unit, configured to obtain a transmit power of an optical transmitter of the optical line terminal and minimum sensitivity of the optical receiver of the optical line terminal according to the passive optical network identification information and to obtain the optical power budget level comprised in the passive optical network identification information by parsing an optical distribution network class field in the passive optical network identification information and to query the storing unit for the stored minimum sensitivity corresponding to the obtained optical power budget level; a third obtaining unit, configured to obtain a receive power of an optical receiver of the optical network unit; a calculation unit, configured to calculate line attenuation according to the transmit power of the optical transmitter of the optical line terminal and the receive power of the optical receiver of the optical network unit; and an adjustment unit, configured to adjust a transmit power of an optical transmitter of the optical network unit according to the line attenuation and the minimum sensitivity of the optical receiver of the optical line terminal.

According to a third aspect, an embodiment of this application provides an optical network unit. The optical network unit has functions of implementing the method in any one of the first aspect or the foregoing implementations of the first aspect. The functions may be implemented by using hardware, or may be implemented by hardware by executing corresponding software. The hardware or software includes one or more modules that correspond to the foregoing functions.

In a possible design, the optical network unit includes a processor, an optical transmitter, a memory, and a bus. The processor, the optical transmitter, and the memory are interconnected by using the bus. The memory is configured to store an instruction or data wherein a sensitivity and a minimum overload corresponding to each of several optical power budget levels are locally stored. The processor and the memory are coupled, and the processor is configured to implement the following functions of any one of the first aspect or the foregoing implementations of the first aspect: obtaining passive optical network identification information comprising an optical power budget level of an optical interface of an optical receiver of an optical line terminal; obtaining a transmit power of an optical transmitter of the optical line terminal and minimum sensitivity of the optical receiver of the optical line terminal according to the passive optical network identification information and to obtain the optical power budget level comprised in the passive optical network identification information by parsing an optical distribution network class field in the passive optical network identification information and to query the memory for the stored minimum sensitivity corresponding to the obtained optical power budget level; obtaining a receive power of an optical receiver of the optical network unit; calculating line attenuation according to the transmit power of the optical transmitter of the optical line terminal and the receive power of the optical receiver of the optical network unit; and adjusting a transmit power of the optical transmitter of the optical network unit according to the line attenuation and the minimum sensitivity of the optical receiver of the optical line terminal. The optical transmitter is configured to transmit an optical signal at an adjusted transmit power of the optical transmitter of the optical network unit.

Compared with the prior art, according to the method, the apparatus, and the optical network unit in the embodiments of the present invention, an upstream optical transmit power of the optical network unit can be dynamically adjusted, so that energy consumption is reduced.

**BRIEF DESCRIPTION OF DRAWINGS**

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a schematic diagram of a topology structure frequently used for an existing passive optical network;

FIG. 2 is a flowchart of a method for controlling a transmit power of an optical network unit according to an embodiment of the present invention;

FIG. 3 is a schematic structural diagram of a PON-ID block;

FIG. 4 is a schematic structural diagram of a PLOAM message;

FIG. 5 is a schematic structural diagram of a downstream physical frame of an XG-PON;

FIG. 6 is a schematic diagram of a physical configuration of an ODN;

FIG. 7 is a schematic diagram of an optical transmission loss in a passive optical network;

FIG. 8 is a component block diagram of an apparatus for controlling a transmit power of an optical network unit according to an embodiment of the present invention; and

FIG. 9 is a schematic structural diagram of an optical network unit according to an embodiment of the present invention.

**DESCRIPTION OF EMBODIMENTS**

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

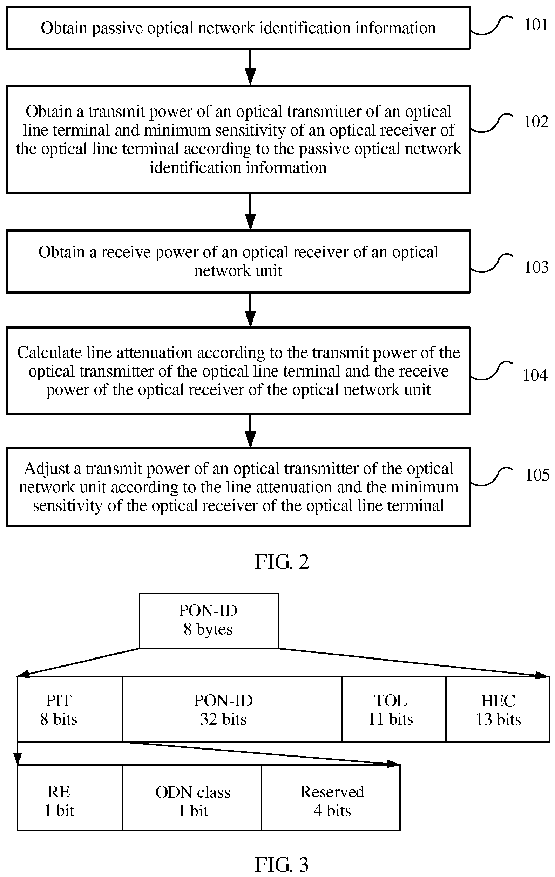

Based on ITU-T G.984 standards, a GPON (Gigabit Passive optical Network, gigabit-capable passive optical network) technology is a broadband passive optical network integrated access technology that supports a downstream rate of a maximum of 2.48832 Gbps. An XG-PON (10-Gigabit Passive Optical Networks, 10-gigabit-capable passive optical network) technology is a GPON system rate upgrade technology, and supports a downstream rate of a maximum of 9.95328 Gbps. The XG-PON technology complies with ITU-T G.987 standards, and a system compositional architecture and a networking form of an XG-PON are completely consistent with those of a GPON. FIG. 2 is a flowchart of a method for controlling a transmit power of an optical network unit according to an embodiment of the present invention. The method provided in this embodiment may be applied to a GPON or an XG-PON. This is not limited in this embodiment of the present invention. Referring to FIG. 2, the method includes the following steps.

Step 101: Obtain passive optical network identification information.

The passive optical network identification (PON-ID) information includes a PON port identifier and a transmit power of an optical network. Referring to FIG. 3,

FIG. 3 shows a PON-ID structure defined in the G987.3 standard. A PIT field includes a RE flag bit, an ODN class, and 4 reserved bits. The RE flag bit is used to indicate whether a TOL (Transmit Optical Level, transmit optical level) field includes a transmit power of an OLT.

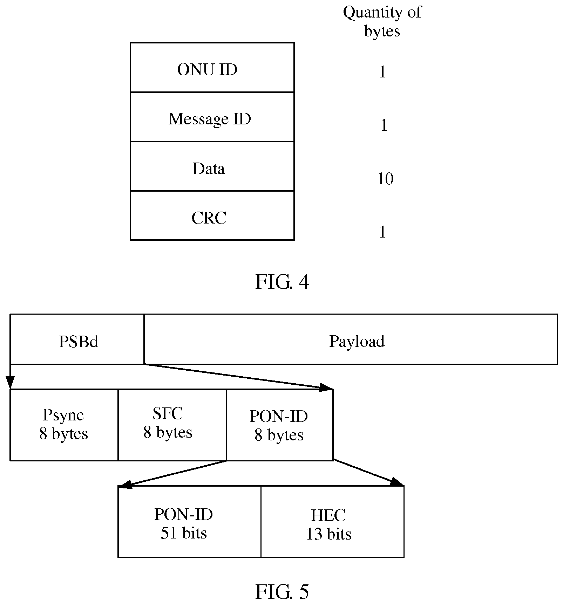

In a GPON system, the PON-ID information is obtained by parsing a downstream PLOAM message. The PLOAM message is a physical layer OAM (operation, administration and maintenance, operation, administration and maintenance) message. A format of the PLOAM message is shown in FIG. 4. When an ONU-ID is 0xFF, it indicates that the PLOAM message is a broadcast message. A message-ID field defines various types of PLOAM messages, and the types include Upstream_Overhead, Assign_ONU-ID, Ranging_Time, and the like. A data field is related to a payload of a GTC message. CRC is a frame check sequence. Referring to Table 1, a PON-ID PLOAM message includes three structures: a PON-ID type (1 byte), a PON identifier (7 bytes), and a TOL (2 bytes).

In an XG-PON system, the PON-ID information is obtained by parsing a passive optical network identification (PON-ID) block in a downstream physical synchronization block of a downstream physical frame. The downstream physical frame of the OLT has a fixed length. When a downstream rate is 9.95328 Gbit/s, the frame length of the downstream physical frame is 155520 bytes, and a transmission interval is 125 $\mu$s. A structure of the downstream physical frame is shown in FIG. 5, and the downstream physical frame includes a 24-byte physical synchronization block (PSBd) and a 155496-byte physical frame payload.

**Table 1**

| PON-ID PLOAM message | | | |
|---|---|---|
| Byte | Content | Description |
| 1 | 11111111 | Broadcast message |
| 2 | 00010101 | Message identifier "PON-ID" |
| 3 | ACCCpppp | PON-ID type<br>Bit A<br>0: A TOL reports a power class of an OLT<br>1: A TOL reports a power class of a RE<br>Bits CCC represents a power budget class of an ODN:<br>000 represents a class A<br>001 represents a class B<br>010 represents a class B+<br>011 represents a class C<br>100 represents a class C+<br>Bits pppp are reserved bits |
| 4 | bbbbbbbb | PON identifier byte 1 |
| | | |
| 10 | bbbbbbbb | PON identifier byte 7 |
| 11-12 | Tx optical fiber class | Average optical transmit power that is of a network element and that is obtained by means of measurement |

Step 102: Obtain a transmit power of an optical transmitter of an optical line terminal and minimum sensitivity of an optical receiver of the optical line terminal according to the passive optical network identification information.

The transmit power of the OLT is obtained by parsing the TOL field in the PON-ID. In the XG-PON, ITU-T G.987 defines four optical power budget specifications, to meet application requirements of different ODN classes. The four specifications include N1, N2, E1, and E2. The class N2 is divided into N2a and N2b, and the class E2 is divided into E2a and E2b. Losses of the classes N1, N2, E1, and E2 range from 14 dB to 29 dB, 16 dB to 31 dB, 18 dB to 33 dB, and 20 dB to 35 dB respectively. A correspondence between an ODN class field in the PIT field in the PON-ID and an ODN class is shown in Table 2.

**Table 2**

| Class value | ODN class |
|---|---|
| 000 | N1 |
| 001 | N2a |
| 010 | N2b |
| 011 | E1 |
| 100 | E2a |
| 101 | E2b |
| 110 | Reserved |
| 111 | Reserved |

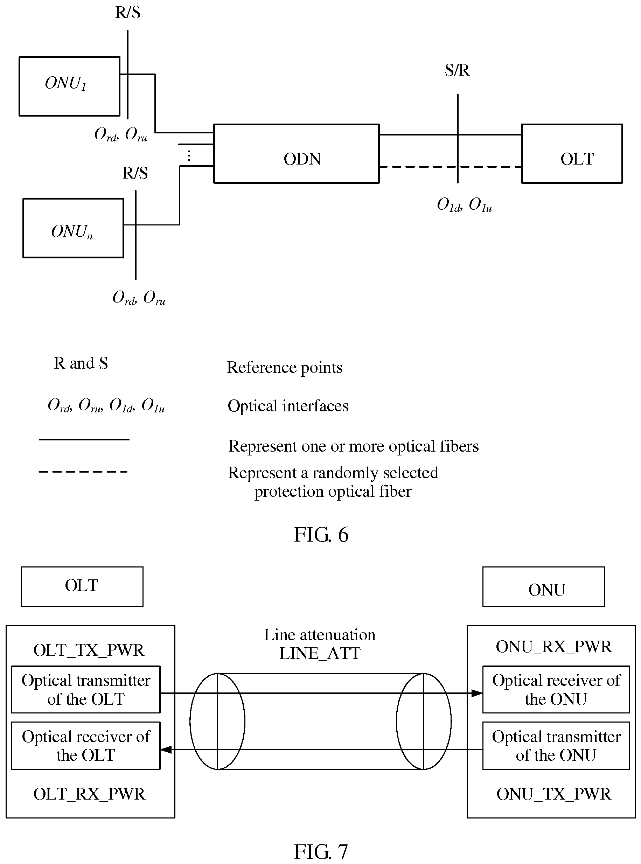

Referring to FIG. 6, FIG. 6 shows a general physical configuration of an ODN. The ODN provides one or more optical channels between one OLT and multiple ONUs. FIG. 6 defines the following optical interfaces: $O_{rd}$, $O_{ru}$, which are optical interfaces at a reference point R/S that are respectively used for downstream and upstream transmission between the ONUs and the ODN; and $O_{ld}$, $O_{lu}$, which are optical interfaces at a reference point R/S that are respectively used for downstream and upstream transmission between the OLT and the ODN. G.984 stipulates optical interface parameters. All parameter values are worst-case values, and it is considered that the parameter values are feasible in operating conditions (that is, a temperature and humidity) of the entire standard that further include an aging effect. These parameters are designed for an optical section for which a bit error rate (BER) is not greater than $1 \times 10^{-10}$ in extreme optical channel attenuation and dispersion conditions. G.984.2 stipulates minimum sensitivity and minimum overload at each optical power budget level of an optical interface $O_{Iu}$ of an OLT receiver at upstream rates 155 Mbit/s, 622 Mbit/s, and 1244 Mbit/s in the GPON system. Table 3 provides minimum sensitivity and minimum overload at each optical power budget level of the optical interface $O_{Iu}$ of the OLT receiver at the upstream rate 1244 Mbit/s in G.984.2. For optical interface parameters corresponding to other upstream rates, refer to the G.984.2 protocol. The minimum sensitivity is defined as a minimum acceptable value, for achieving a $10^{-10}$ BER, of an average receive power at a point R. The minimum overload is a maximum acceptable value, for achieving the $10^{-10}$ BER, of the average receive power at the point R.

Referring to Table 4, as stipulated in G.987.2, Table 4 provides minimum sensitivity and minimum overload at each optical power budget level of the optical interface $O_{Iu}$ of the OLT receiver at an upstream rate 2.48832 Gbit/s in the XG-PON system.

The ONU stores locally minimum sensitivity and minimum overload corresponding to each optical power budget level of the optical interface $O_{Iu}$ of the OLT receiver at each upstream rate, obtains an optical power budget level by parsing the ODN class field in the PON-ID, and then queries locally stored minimum sensitivity corresponding to the optical power budget level.

**Table 3**

| Item | Single fiber | | | Dual fibers | | |
|---|---|---|---|---|---|---|
| ODN class | A | B | C | A | B | C |
| Minimum sensitivity (dBm) | -23 | -28 | -29 | -23 | -28 | -29 |
| Minimum overload (dBm) | -8 | -13 | -14 | -8 | -13 | -14 |

**Table 4**

| ODN class | N1 | N2 | E1 | E2 |
|---|---|---|---|---|
| **Minimum sensitivity (dBm)** | -27.5 | -29.5 | -31.5 | -33.5 |
| **Minimum overload (dBm)** | -7.0 | -9.0 | -11 | -13 |

Step 103: Obtain a receive power of an optical receiver of the optical network unit.

The SFF-8472 protocol stipulates that two I2C slave device addresses: A0H and A2H are set in an EEPROM, and 256 bytes of data can be accessed by using each slave device address. A0H is used to store some specific information of an optical module, such as a module type, a serial number, a manufacturing date, a wavelength, and a transfer distance, and some specific vendor information. After detecting data such as a temperature, an operating voltage, a bias current, an optical transmit power, and an optical receive power by using an internal circuit, the optical module obtains a statistically represented measurement result and a corresponding calibration constant according to a specific algorithm. The real-time measurement result is stored in a specific byte in the A2H address.

The SFF-8472 protocol stipulates types of digital diagnosis calibration that include internal calibration and external calibration. The calibration type is identified by using the 92nd byte in A0h. When internal calibration is used, a detected value may be calibrated as an absolute value, and the detected value is calibrated according to an operating temperature and a voltage specified by a vendor. The optical receive power, expressed in a unit of mW, is represented by using a 16-bit unsigned integer (0 to 65535). 1 LSB is equal to 0.1 uW, and the optical receive power ranges from 0 mW to 6.5535 mW (-40 dBm to +8.2 dBm).

When external calibration is used, a detected value is unprocessed A/D conversion data. The detected value needs to be converted into an actual value by reading a calibration constant from a byte 56 to a byte 95 in the A2h address in the EEPROM. Calibration is effective within an operating temperature range and a voltage range specified by the vendor.

The receive power Rx_PWR of the optical receiver of the optical network unit may be obtained by using the following expression:

$$Rx\_PWR(\mu W) = Rx\_PWR(4){*}Rx\_PWR_{AD^4}\,(16-\text{bit unsigned integer})+$$
$$Rx\_PWR(3){*}Rx\_PWR_{AD^3}\,(16-\text{bit unsigned integer})+$$
$$Rx\_PWR(2){*}Rx\_PWR_{AD^2}\,(16-\text{bit unsigned integer})+$$
$$Rx\_PWR(1){*}Rx\_PWR_{AD}\,(16-\text{bit unsigned integer})+$$
$$Rx\_PWR(0)$$

Rx_PWR, expressed in a smallest unit of 0.1 uW, ranges from 0 mW to 6.5 mW. Table 5 provides values (the address A2h, from the byte 56 to the byte 95) of Rx_PWR (4 to 0). $Rx\_PWR_{AD}$ is a 16-bit unsigned integer. A value of $Rx\_PWR_{AD}$ is stored in 68H in the A2H address, occupies 2 bytes, and may be read by using a 12C bus.

**Table 5**

| Address | Byte | Name |
| --- | --- | --- |
| 56-59 | 4 | Rx_PWR(4) |
| 60-63 | 4 | Rx_PWR(3) |
| 64-67 | 4 | Rx_PWR(2) |
| 68-71 | 4 | Rx_PWR(1) |
| 72-75 | 4 | Rx_PWR(0) |

Step 104: Calculate line attenuation according to the transmit power of the optical transmitter of the optical line terminal and the receive power of the optical receiver of the optical network unit.

Referring to FIG. 7, FIG. 7 is a schematic diagram of an optical transmission loss in a passive optical network. Line attenuation is marked as LINE_ATT, the transmit power of the optical transmitter and the receive power of the optical receiver of the OLT are marked as OLT_TX_PWR and OLT_RX_PWR respectively, and a transmit power of an optical transmitter and the receive power of the optical receiver of the ONU are marked as ONU_TX_PWR and ONU_RX_PWR respectively. The line attenuation is a difference between the transmit power of the optical transmitter of the OLT and the receive power of the optical receiver of the ONU, that is, LINE ATT=OLT_TX PWR-ONU_RX_PWR.

Step 105: Adjust a transmit power of an optical transmitter of the optical network unit according to the line attenuation and the minimum sensitivity of the optical receiver of the optical line terminal.

In a possible implementation, a sum of the line attenuation and the minimum sensitivity of the optical receiver of the optical line terminal is calculated, and the sum is used as the transmit power ONU_TX_PWR of the optical transmitter of the optical network unit:

$$ONU\_TX\_PWR=LINE\_ATT+OLT\_MIN\_SEN$$

In another possible implementation, a sum of the line attenuation, the minimum sensitivity of the optical receiver of the optical line terminal, and a specific power headroom is used as the transmit power ONU_TX_PWR of the optical transmitter of the optical network unit:

$$ONU\_TX\_PWR=LINE\_ATT+OLT\_MIN\_SEN+\Delta P$$

The transmit power of the optical transmitter of the optical network unit needs to ensure that an OLT PON port can stably receive an optical signal sent by the ONU. To avoid interference, a sum obtained after the power headroom $\Delta P$ is added to the calculated transmit power is used as the transmit power of the optical transmitter of the optical network unit, to ensure that the OLT PON port can stably receive the optical signal sent by the ONU. The added power headroom $\Delta P$ is an empirical value and generally ranges from 2 decibels to 3 decibels.

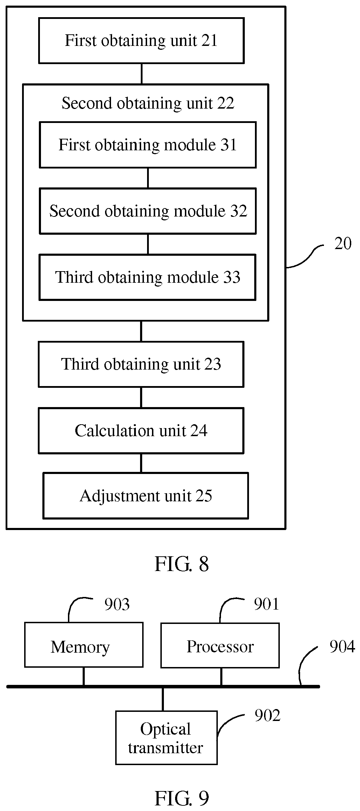

FIG. 8 is a component block diagram of an apparatus for controlling a transmit power of an optical network unit according to an embodiment of the present invention. Referring to FIG. 8, the apparatus includes:

a first obtaining unit 21, configured to obtain passive optical network identification information;

a second obtaining unit 22, configured to obtain a transmit power of an optical transmitter of an optical line terminal and minimum sensitivity of an optical receiver of the optical line terminal according to the passive optical network identification information;

a third obtaining unit 23, configured to obtain a receive power of an optical receiver of the optical network unit;

a calculation unit 24, configured to calculate line attenuation according to the transmit power of the optical transmitter of the optical line terminal and the receive power of the optical receiver of the optical network unit; and

an adjustment unit 25, configured to adjust a transmit power of an optical transmitter of the optical network unit according to the line attenuation and the minimum sensitivity of the optical receiver of the optical line terminal.

Optionally, the first obtaining unit 21 is specifically configured to: if a passive optical network is a gigabit-capable passive optical network GPON, obtain the passive optical network identification information by parsing a physical layer operation, administration and maintenance PLOAM message.

Optionally, the first obtaining unit 21 is specifically configured to: if a passive optical network is a 10-gigabit-capable passive optical network XG-PON, obtain the passive optical network identification information by parsing a physical synchronization block of a downstream physical frame.

Optionally, the second obtaining unit 22 further includes: a first obtaining module 31, configured to obtain the transmit power of the optical transmitter of the optical line terminal according to the passive optical network identification information; a second obtaining module 32, configured to obtain an optical distribution network type according to the passive optical network identification information; and a third obtaining module 33, configured to obtain the minimum sensitivity of the optical receiver of the optical line terminal according to the optical distribution network type.

FIG. 9 is a schematic structural diagram of an optical network unit according to an embodiment of the present invention. Referring to FIG. 9, the optical network unit includes: a processor 901, an optical transmitter 902, a memory 903, and a bus 904.

The processor 901, the optical transmitter 902, and the memory 903 are interconnected by using the bus 904.

The memory 903 is configured to store an instruction or data.

The processor 901 is configured to: obtain passive optical network identification information; obtain a transmit power of an optical transmitter of an optical line terminal and minimum sensitivity of an optical receiver of the optical line terminal according to the passive optical network identification information; obtain a receive power of an optical receiver of the optical network unit; calculate line attenuation according to the transmit power of the optical transmitter of the optical line terminal and the receive power of the optical receiver of the optical network unit; and adjust a transmit power of the optical transmitter of the optical network unit according to the line attenuation and the minimum sensitivity of the optical receiver of the optical line terminal.

The optical transmitter 902 is configured to transmit an optical signal at an adjusted transmit power of the optical transmitter of the optical network unit.

In this embodiment, the processor 901 is specifically configured to: if a passive optical network is a gigabit-capable passive optical network GPON, obtain the passive optical network identification information by parsing a physical layer operation, administration and maintenance PLOAM message.

In this embodiment, the processor 901 is specifically configured to: if the passive optical network is an XG-PON, obtain the passive optical network identification information by parsing a physical synchronization block of a downstream physical frame.

In this embodiment, the processor 901 is specifically configured to:

obtain the transmit power of the optical transmitter of the optical line terminal according to the passive optical network identification information;

obtain an optical distribution network type according to the passive optical network identification information; and

obtain the minimum sensitivity of the optical receiver of the optical line terminal according to the optical distribution network type.

The optical network unit in this embodiment of the present invention can dynamically adjust an upstream optical transmit power of the optical network unit, so that energy consumption is reduced.

The processor of the optical network unit configured to execute the present invention may be a central processing unit (CPU), a general-purpose processor, a digital signal processor (DSP), an application-specific integrated circuit (ASIC), a field programmable gate array (FPGA) or another programmable logical device, a transistor logical device, a hardware component, or any combination thereof. The processor may implement or execute various example logical blocks, modules, and circuits described with reference to content disclosed in the present invention. Alternatively, the processor may be a combination of processors implementing a computing function, for example, a combination of one or more microprocessors, or a combination of a DSP and a microprocessor.

Steps of the methods or algorithms described with reference to the content disclosed in the present invention

**EP 3 379 745 B1**

may be implemented by using hardware, or may be in implemented by executing a software instruction by a processor. The software instruction may include a corresponding software module, and the software module may be located in a RAM memory, a flash memory, a ROM memory, an EPROM memory, an EEPROM memory, a register, a hard disk, a removable hard disk, a CD-ROM, or any other form of storage medium known in the art. For example, a storage medium is coupled to a processor, so that the processor can read information from the storage medium or write information into the storage medium. Certainly, the storage medium may be a component of the processor. The processor and the storage medium may be located in an ASIC. In addition, the ASIC may be located in user equipment. Certainly, the processor and the storage medium may be located in the user equipment as discrete components.

A person skilled in the art should be aware that in the foregoing one or more examples, functions described in the present invention may be implemented by hardware, software, firmware, or any combination thereof. When the present invention is implemented by software, the foregoing functions may be stored in a computer-readable medium or transmitted as one or more instructions or code in the computer-readable medium. The computer-readable medium includes a computer storage medium and a communications medium, and the communications medium includes any medium that enables a computer program to be transmitted from one place to another. The storage medium may be any available medium accessible to a general-purpose or dedicated computer.

The objectives, technical solutions, and benefits of the present invention are further described in detail in the foregoing specific embodiments. It should be understood that the foregoing descriptions are merely specific embodiments of the present invention, but are not intended to limit the protection scope of the present invention as set forth in the appended claims.

**Claims**

1. A method for controlling a transmit power of an optical network unit locally storing a minimum sensitivity and a minimum overload corresponding to each of several optical power budget levels at each of several upstream rates , comprising:

   obtaining (101) passive optical network identification information comprising an optical power budget level at an upstream rate of an optical interface of an optical receiver of an optical line terminal;
   obtaining (102) a transmit power of an optical transmitter of the optical line terminal and minimum sensitivity of the optical receiver of the optical line terminal according to the passive optical network identification information and obtaining the optical power budget level comprised in the passive optical network identification information by parsing an optical distribution network class field in the passive optical network identification information and querying for the locally stored minimum sensitivity corresponding to the obtained optical power budget level;
   obtaining (103) a receive power of an optical receiver of the optical network unit;
   calculating (104) line attenuation according to the transmit power of the optical transmitter of the optical line terminal and the receive power of the optical receiver of the optical network unit; and
   adjusting (105) a transmit power of an optical transmitter of the optical network unit according to the line attenuation and the minimum sensitivity of the optical receiver of the optical line terminal.

2. The method according to claim 1, wherein the obtaining passive optical network identification information comprises:
   if a passive optical network is a gigabit-capable passive optical network, GPON, obtaining the passive optical network identification information by parsing a physical layer operation administration and maintenance, PLOAM, message.

3. The method according to claim 1, wherein the obtaining passive optical network identification information comprises:
   if a passive optical network is a 10-gigabit-capable passive optical network XG-PON, obtaining the passive optical network identification information by parsing a physical synchronization block of a downstream physical frame.

4. An apparatus (20) for controlling a transmit power of an optical network unit, comprising:

   locally stored, a minimum sensitivity and a minimum overload corresponding to each of several optical power budget levels at each of several upstream rates;
   a first obtaining unit (21), configured to obtain passive optical network identification information comprising an optical power budget level at an upstream rate of an optical interface of an optical receiver of an optical line terminal;
   a second obtaining unit (22), configured to obtain a transmit power of an optical transmitter of the optical line terminal and minimum sensitivity of the optical receiver of the optical line terminal according to the passive optical network identification information the second obtaining unit (22) is configured to obtain the optical power

9

budget level comprised in the passive optical network identification information by parsing an optical distribution network class field in the passive optical network identification information and to query the storing unit for the stored minimum sensitivity corresponding to the obtained optical power budget level;

a third obtaining unit (23), configured to obtain a receive power of an optical receiver of the optical network unit; a calculation unit (24), configured to calculate line attenuation according to the transmit power of the optical transmitter of the optical line terminal and the receive power of the optical receiver of the optical network unit; and an adjustment unit (25), configured to adjust a transmit power of an optical transmitter of the optical network unit according to the line attenuation and the minimum sensitivity of the optical receiver of the optical line terminal.

5. The apparatus according to claim 4, wherein the first obtaining unit is specifically configured to:
if a passive optical network is a gigabit-capable passive optical network, GPON, obtain the passive optical network identification information by parsing a physical layer operation administration and maintenance, PLOAM, message.

6. The apparatus according to claim 4, wherein the first obtaining unit is specifically configured to:
if a passive optical network is a 10-gigabit-capable passive optical network XG-PON, obtain the passive optical network identification information by parsing a physical synchronization block of a downstream physical frame.

7. An optical network unit, comprising a processor (901), an optical transmitter (902), a memory (903), and a bus (904), wherein

the processor (901), the optical transmitter (902), and the memory (903) are interconnected by using the bus (904); the memory (903) is configured to store an instruction or data, wherein a minimum sensitivity and a minimum overload corresponding to each of several optical power budget levels at each of several upstream rates are locally stored; the processor (901) is configured to: obtain passive optical network identification information comprising an optical power budget level at an upstream rate of an optical interface of an optical receiver of an optical line terminal; obtain a transmit power of an optical transmitter of the optical line terminal and minimum sensitivity of the optical receiver of the optical line terminal according to the passive optical network identification information wherein the processor is configured to obtain the optical power budget level comprised in the passive optical network identification information by parsing an optical distribution network class field in the passive optical network identification information and to query the memory for the stored minimum sensitivity corresponding to the obtained optical power budget level; obtain a receive power of an optical receiver of the optical network unit; calculate line attenuation according to the transmit power of the optical transmitter of the optical line terminal and the receive power of the optical receiver of the optical network unit; and adjust a transmit power of the optical transmitter of the optical network unit according to the line attenuation and the minimum sensitivity of the optical receiver of the optical line terminal; and the optical transmitter (902) is configured to transmit an optical signal at an adjusted transmit power of the optical transmitter of the optical network unit.

8. The optical network unit according to claim 7, wherein the obtaining passive optical network identification information comprises:
if a passive optical network is a gigabit-capable passive optical network, GPON, obtaining the passive optical network identification information by parsing a physical layer operation administration and maintenance, PLOAM, message.

9. The optical network unit according to claim 7, wherein the obtaining passive optical network identification information comprises:
if a passive optical network is a 10-gigabit-capable passive optical network, XG-PON, obtain the passive optical network identification information by parsing a physical synchronization block of a downstream physical frame.

## Patentansprüche

1. Verfahren zum Steuern einer Sendeleistung einer optischen Netzwerkeinheit, die eine minimale Empfindlichkeit und eine minimale Überlastung lokal speichert, die jedem der mehreren optischen Leistungsbudgetniveaus mit jeder von mehreren Upstream-Raten entspricht, Folgendes umfassend:

Erhalten (101) von Identifikationsinformationen für ein passives optisches Netzwerk, die ein optisches Leistungsbudgetniveau mit einer Upstream-Rate einer optischen Schnittstelle eines optischen Empfängers eines optischen Netzanschlusses umfassen;
Erhalten (102) einer Sendeleistung eines optischen Senders des optischen Netzanschlusses und einer minimalen Empfindlichkeit des optischen Empfängers des optischen Netzanschlusses gemäß den Identifikationsinformationen für ein passives optisches Netzwerk und Erhalten des optischen Leistungsbudgetniveaus, das in den Identifikationsinformationen für ein passives optisches Netzwerk enthalten ist, durch Parsen eines optischen Verteilungsnetzwerkklassenfelds in den Identifikationsinformationen für ein passives optisches Netzwerk und Abfragen der lokal gespeicherten minimalen Empfindlichkeit, die dem erhaltenen optischen Leistungsbudgetniveau entspricht;

Erhalten (103) einer Empfangsleistung eines optischen Empfängers der optischen Netzwerkeinheit;

Berechnen (104) der Leitungsdämpfung gemäß der Sendeleistung des optischen Senders des optischen Netzanschlusses und der Empfangsleistung des optischen Empfängers der optischen Netzwerkeinheit; und

Einstellen (105) einer Sendeleistung eines optischen Senders der optischen Netzwerkeinheit gemäß der Leitungsdämpfung und der minimalen Empfindlichkeit des optischen Empfängers des optischen Netzanschlusses.

2.  Verfahren nach Anspruch 1, wobei das Erhalten der Identifikationsinformationen für ein passives optisches Netzwerk Folgendes umfasst:

    wenn es sich bei einem passiven optischen Netzwerk um ein Gigabit-fähiges passives optisches Netzwerk (GPON) handelt, Erhalten der Identifikationsinformationen für ein passives optisches Netzwerk durch Parsen einer Nachricht zur Betriebsverwaltung und Wartung der physikalischen Schicht (*physical layer operation administration and maintenance* - PLOAM).

3.  Verfahren nach Anspruch 1, wobei das Erhalten der Identifikationsinformationen für ein passives optisches Netzwerk Folgendes umfasst:

    wenn es sich bei einem passiven optischen Netzwerk um ein 10-Gigabit-fähiges passives optisches Netzwerk (XG-PON) handelt, Erhalten der Identifikationsinformationen für ein passives optisches Netzwerk durch Parsen eines physikalischen Synchronisierungsblocks eines nachgelagerten physikalischen Rahmens.

4.  Vorrichtung (20) zum Steuern einer Sendeleistung einer optischen Netzwerkeinheit, Folgendes umfassend:

    lokal gespeichert, eine minimale Empfindlichkeit und eine minimale Überlastung, die jedem der mehreren optischen Leistungsbudgetniveaus auf jeder der mehreren Upstream-Raten entspricht;

    eine erste Erhaltungseinheit (21), die zum Erhalten von Identifikationsinformationen für ein passives optisches Netzwerk konfiguriert ist, die ein optisches Leistungsbudgetniveau mit einer Upstream-Rate einer optischen Schnittstelle eines optischen Empfängers eines optischen Netzanschlusses umfassen;

    eine zweite Erhaltungseinheit (22), die zum Erhalten einer Sendeleistung eines optischen Senders des optischen Netzanschlusses und einer minimalen Empfindlichkeit des optischen Empfängers des optischen Netzanschlusses gemäß den Identifikationsinformationen für ein passives optisches Netzwerk konfiguriert ist, wobei die zweite Erhaltungseinheit (22) zum Erhalten des optischen Leistungsbudgetniveaus, das in den Identifikationsinformationen für ein passives optisches Netzwerk enthalten ist, durch Parsen eines optischen Verteilungsnetzwerkklassenfelds in den Identifikationsinformationen für ein passives optisches Netzwerk und zum Abfragen der Speichereinheit für die gespeicherte minimale Empfindlichkeit, die dem erhaltenen optischen Leistungsbudgetniveau entspricht, konfiguriert ist;

    eine dritte Erhaltungseinheit (23), die zum Erhalten einer Empfangsleistung eines optischen Empfängers der optischen Netzwerkeinheit konfiguriert ist;

    eine Berechnungseinheit (24), die zum Berechnen der Leitungsdämpfung gemäß der Sendeleistung des optischen Senders des optischen Netzanschlusses und der Empfangsleistung des optischen Empfängers der optischen Netzwerkeinheit konfiguriert ist; und

    eine Einstellungseinheit (25), die zum Einstellen einer Sendeleistung eines optischen Senders der optischen Netzwerkeinheit gemäß der Leitungsdämpfung und der minimalen Empfindlichkeit des optischen Empfängers des optischen Netzanschlusses konfiguriert ist.

5.  Vorrichtung nach Anspruch 4, wobei die erste Erhaltungseinheit speziell für Folgendes konfiguriert ist:

    wenn es sich bei einem passiven optischen Netzwerk um ein Gigabit-fähiges passives optisches Netzwerk (GPON) handelt, Erhalten der Identifikationsinformationen für ein passives optisches Netzwerk durch Parsen einer Nachricht zur Betriebsverwaltung und Wartung der physikalischen Schicht (PLOAM).

6.  Vorrichtung nach Anspruch 4, wobei die erste Erhaltungseinheit speziell für Folgendes konfiguriert ist:

    wenn es sich bei einem passiven optischen Netzwerk um ein 10-Gigabit-fähiges passives optisches Netzwerk (XG-PON) handelt, Erhalten der Identifikationsinformationen für ein passives optisches Netzwerk durch Parsen eines physikalischen Synchronisierungsblocks eines nachgelagerten physikalischen Rahmens.

7. Optische Netzwerkeinheit, umfassend einen Prozessor (901), einen optischen Sender (902), einen Speicher (903) und einen Bus (904), wobei der Prozessor (901), der optische Sender (902), und der Speicher (903) unter Verwendung des Busses (904) miteinander verbunden sind;

der Speicher (903) zum Speichern einer Anweisung oder von Daten konfiguriert ist, wobei eine minimale Empfindlichkeit und eine minimale Überlastung, die jedem der mehreren optischen Leistungsbudgetniveaus auf jeder der mehreren Upstream-Raten entspricht, lokal gespeichert werden;

wobei der Prozessor (901) für Folgendes konfiguriert ist:

Erhalten von Identifikationsinformationen für ein passives optisches Netzwerk, die ein optisches Leistungsbudgetniveau mit einer Upstream-Rate einer optischen Schnittstelle eines optischen Empfängers eines optischen Netzanschlusses umfassen;

Erhalten einer Sendeleistung eines optischen Senders des optischen Netzanschlusses und einer minimalen Empfindlichkeit des optischen Empfängers des optischen Netzanschlusses gemäß den Identifikationsinformationen für ein passives optisches Netzwerk, wobei der Prozessor zum Erhalten des optischen Leistungsbudgetniveaus, das in den Identifikationsinformationen für ein passives optisches Netzwerk enthalten ist, durch Parsen eines optischen Verteilungsnetzwerkklassenfelds in den Identifikationsinformationen für ein passives optisches Netzwerk und zum Abfragen des Speichers für die gespeicherte minimale Empfindlichkeit, die dem erhaltenen optischen Leistungsbudgetniveau entspricht, konfiguriert ist;

Erhalten einer Empfangsleistung eines optischen Empfängers der optischen Netzwerkeinheit;

Berechnen der Leitungsdämpfung gemäß der Sendeleistung des optischen Senders des optischen Netzanschlusses und der Empfangsleistung des optischen Empfängers der optischen Netzwerkeinheit; und

Einstellen einer Sendeleistung des optischen Senders der optischen Netzwerkeinheit gemäß der Leitungsdämpfung und der minimalen Empfindlichkeit des optischen Empfängers des optischen Netzanschlusses; und wobei der optische Sender (902) zum Senden eines optischen Signals an einer eingestellten Sendeleistung des optischen Senders der optischen Netzwerkeinheit konfiguriert ist.

8. Optische Netzwerkeinheit nach Anspruch 7, wobei das Erhalten der Identifikationsinformationen für ein passives optisches Netzwerk Folgendes umfasst:

wenn es sich bei einem passiven optischen Netzwerk um ein Gigabit-fähiges passives optisches Netzwerk (GPON) handelt, Erhalten der Identifikationsinformationen für ein passives optisches Netzwerk durch Parsen einer Nachricht zur Betriebsverwaltung und Wartung der physikalischen Schicht (*physical layer operation administration and maintenance* - PLOAM).

9. Optische Netzwerkeinheit nach Anspruch 7, wobei das Erhalten der Identifikationsinformationen für ein passives optisches Netzwerk Folgendes umfasst:

wenn es sich bei einem passiven optischen Netzwerk um ein 10-Gigabit-fähiges passives optisches Netzwerk (XG-PON) handelt, Erhalten der Identifikationsinformationen für ein passives optisches Netzwerk durch Parsen eines physikalischen Synchronisierungsblocks eines nachgelagerten physikalischen Rahmens.

## Revendications

1. Procédé de régulation de puissance d'émission d'une unité de réseau optique enregistrant localement une sensibilité minimale et une surcharge minimale correspondant à chacun de plusieurs seuils d'allocation de puissance optique à chacun de plusieurs débits de liaison montante, consistant à :

obtenir (101) des informations d'identification du réseau optique passif, comprenant un seuil d'allocation de puissance optique d'un débit de liaison montante d'une interface optique d'un récepteur optique d'un terminal de ligne optique ;

obtenir (102) une puissance d'émission d'un émetteur optique du terminal de ligne optique et une sensibilité minimale du récepteur optique du terminal de ligne optique en fonction des informations d'identification du réseau optique passif et obtenir le seuil d'allocation de puissance optique compris dans les informations d'identification du réseau optique passif en analysant un champ de classe de réseau de distribution optique passif parmi les informations d'identification du réseau optique passif et en soumettant une interrogation quant à la sensibilité minimale enregistrée localement correspondant au seuil d'allocation de puissance optique obtenu ;

obtenir (103) une puissance de réception d'un récepteur optique de l'unité de réseau optique ;

calculer (104) l'atténuation de la ligne en fonction de la puissance d'émission de l'émetteur optique du terminal de ligne optique et de la puissance de réception du récepteur optique de l'unité de réseau optique ; et

ajuster (105) une puissance d'émission d'un émetteur optique de l'unité de réseau optique en fonction de l'atténuation de la ligne et de la sensibilité minimale du récepteur optique du terminal de ligne optique.

2. Procédé selon la revendication 1, dans lequel l'obtention d'informations d'identification du réseau optique passif consiste à :
si un réseau optique passif est un réseau optique passif d'une capacité de l'ordre du gigabit, GPON, obtenir les informations d'identification du réseau optique passif en analysant un message sur l'exécution, l'administration et la maintenance de la couche physique, PLOAM.

3. Procédé selon la revendication 1, dans lequel l'obtention d'informations d'identification du réseau optique passif consiste à :
si un réseau optique passif est un réseau optique passif d'une capacité de l'ordre de 10 gigabits XG-PON, obtenir les informations d'identification du réseau optique passif en analysant un bloc de synchronisation physique d'une trame physique de liaison descendante.

4. Appareil (20) de régulation de puissance d'émission d'une unité de réseau optique, comprenant :

une sensibilité minimale et une surcharge minimale, enregistrées localement, correspondant à chacun de plusieurs seuils d'allocation de puissance optique à chacun de plusieurs débits de liaison montante ;
une première unité d'obtention (21), configurée pour obtenir des informations d'identification du réseau optique passif comprenant un seuil d'allocation de puissance optique à un débit de liaison montante d'une interface optique d'un récepteur optique d'un terminal de ligne optique ;
une deuxième unité d'obtention (22), configurée pour obtenir une puissance d'émission d'un émetteur optique du terminal de ligne optique et une sensibilité minimale du récepteur optique du terminal de ligne optique en fonction des informations d'identification du réseau optique passif ; la deuxième unité d'obtention (22) est configurée pour obtenir le seuil d'allocation de puissance optique compris dans les informations d'identification du réseau optique passif en analysant un champ de classe de réseau de distribution optique parmi les informations d'identification du réseau optique passif, et pour soumettre une interrogation à l'unité d'enregistrement quant à la sensibilité minimale enregistrée correspondant au seuil d'allocation de puissance optique obtenu ;
une troisième unité d'obtention (23), configurée pour obtenir une puissance de réception d'un récepteur optique de l'unité de réseau optique ;
une unité de calcul (24), configurée pour calculer l'atténuation de la ligne en fonction de la puissance d'émission de l'émetteur optique du terminal de ligne optique et de la puissance de réception du récepteur optique de l'unité de réseau optique ; et
une unité d'ajustement (25), configurée pour ajuster la puissance d'émission d'un émetteur optique de l'unité de réseau optique en fonction de l'atténuation de la ligne et de la sensibilité minimale du récepteur optique du terminal de ligne optique.

5. Appareil selon la revendication 4, dans lequel la première unité d'obtention est spécifiquement configurée pour :
si un réseau optique passif est un réseau optique passif d'une capacité de l'ordre du gigabit, GPON, obtenir les informations d'identification du réseau optique passif en analysant un message sur l'exécution, l'administration et la maintenance de la couche physique, PLOAM.

6. Appareil selon la revendication 4, dans lequel la première unité d'obtention est spécifiquement configurée pour :
si un réseau optique passif est un réseau optique passif d'une capacité de l'ordre de 10 gigabits XG-PON, obtenir les informations d'identification du réseau optique passif en analysant un bloc de synchronisation physique d'une trame physique de liaison descendante.

7. Unité de réseau optique, comprenant un processeur (901), un émetteur optique (902), une mémoire (903), et un bus (904), dans laquelle le processeur (901), l'émetteur optique (902), et la mémoire (903) sont interconnectés par le biais du bus (904) ;
la mémoire (903) est configurée pour enregistrer une instruction ou des données, une sensibilité minimale et une surcharge minimale, correspondant à chacun de plusieurs seuils d'allocation de puissance optique à chacun de plusieurs débits de liaison montante, étant enregistrées localement ;
le processeur (901) est configuré pour :

obtenir des informations d'identification du réseau optique passif comprenant un seuil d'allocation de puissance optique à un débit de liaison montante d'une interface optique d'un récepteur optique d'un terminal de ligne optique ;

obtenir une puissance d'émission d'un émetteur optique du terminal de ligne optique et une sensibilité minimale du récepteur optique du terminal de ligne optique en fonction des informations d'identification du réseau optique passif, le processeur étant configuré pour obtenir le seul d'allocation de puissance optique compris dans les informations d'identification du réseau optique passif en analysant un champ de classe de réseau de distribution optique dans les informations d'identification du réseau optique passif et en soumettant à la mémoire une interrogation quant à la sensibilité minimale enregistrée correspondant au seuil d'allocation de puissance optique obtenu ;

obtenir une puissance de réception d'un récepteur optique de l'unité de réseau optique ;

calculer l'atténuation de la ligne en fonction de la puissance d'émission de l'émetteur optique du terminal de ligne optique et de la puissance de réception du récepteur optique de l'unité de réseau optique ; et

ajuster une puissance d'émission de l'émetteur optique de l'unité de réseau optique en fonction de l'atténuation de la ligne et de la sensibilité minimale du récepteur optique du terminal de ligne optique ; et

l'émetteur optique (902) est configuré pour émettre un signal optique à une puissance d'émission ajustée de l'émetteur optique de l'unité de réseau optique.

8. Unité de réseau optique selon la revendication 7, dans laquelle l'obtention d'informations d'identification du réseau optique passif consiste à :

si un réseau optique passif est un réseau optique passif d'une capacité de l'ordre du gigabit, GPON, obtenir les informations d'identification du réseau optique passif en analysant un message sur l'exécution, l'administration et la maintenance de la couche physique, PLOAM.

9. Unité de réseau optique selon la revendication 7, dans laquelle l'obtention d'informations d'identification du réseau optique passif consiste à :

si un réseau optique passif est un réseau optique passif d'une capacité de l'ordre de 10 gigabits, XG-PON, obtenir les informations d'identification du réseau optique passif en analysant un bloc de synchronisation physique d'une trame physique de liaison descendante.

FIG. 1

FIG. 2

FIG. 3

Quantity of
bytes

| | |
|---|---|
| ONU ID | 1 |
| Message ID | 1 |
| Data | 10 |
| CRC | 1 |

FIG. 4

| PSBd | Payload |
|---|---|

| Psync 8 bytes | SFC 8 bytes | PON-ID 8 bytes |
|---|---|---|

| PON-ID 51 bits | HEC 13 bits |
|---|---|

FIG. 5

R and S — Reference points

$O_{rd}, O_{ru}, O_{ld}, O_{lu}$ — Optical interfaces

———————— Represent one or more optical fibers

– – – – – – – Represent a randomly selected protection optical fiber

FIG. 6

FIG. 7

First obtaining unit 21

Second obtaining unit 22

First obtaining module 31

Second obtaining module 32

Third obtaining module 33

20

Third obtaining unit 23

Calculation unit 24

Adjustment unit 25

FIG. 8

903

901

904

Memory

Processor

902

Optical transmitter

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101247182 A
- CN 104683022 A
- US 2008292312 A1